# FASCICULE DE BREVET EUROPEEN

(11) **EP 3 080 454 B1**
(45) Date de publication et mention de la délivrance du brevet: **22.08.2018**
(21) Numéro de dépôt: 14800093.8
(22) Date de dépôt: 21.11.2014
(51) Int. Cl.: F01N 3/28, F01N 3/20, F04C 15/06, F04C 14/06, F04C 2/18, F04C 13/00, F04C 14/04

(54) **POMPE POUR ADDITIF**
PUMPE FÜR ADDITIV
PUMP FOR AN ADDITIVE

(30) Priorité: 27.11.2013 FR 1361717
(43) Date de publication de la demande: 19.10.2016
(73) Titulaire: Plastic Omnium Advanced Innovation and Research, 1120 Bruxelles (BE)
(72) Inventeur: LEONARD, Stéphane, B-1090 Bruxelles (BE)
(74) Mandataire: Remy, Vincent Noel Paul
(86) Numéro de dépôt international: PCT/EP2014/075259
(87) Numéro de publication internationale: WO 2015/078777

(56) Documents cités:
- EP-A2- 2 538 082
- WO-A2-2010/119116
- DE-A1-102009 045 030
- US-A1- 2010 175 369

## Description

La présente invention concerne une pompe pour une solution d'un précurseur d'ammoniac. La présente invention s'applique notamment à une pompe du type pompe à engrenage, pompe à palette ou pompe gerotor.

Les législations sur les émissions des véhicules et poids lourds prévoient entre autres une diminution des rejets d'oxydes d'azote NOₓ dans l'atmosphère. Pour atteindre cet objectif on connaît le procédé SCR (Selective Catalytic Reduction) qui permet la réduction des oxydes d'azote par injection d'un agent réducteur, généralement d'ammoniac, dans la ligne d'échappement. Cet ammoniac peut provenir de la décomposition par thermolyse d'une solution d'un précurseur d'ammoniac dont la concentration peut être celle de l'eutectique. Un tel précurseur d'ammoniac est généralement une solution d'urée.

Avec le procédé SCR, les dégagements élevés de NOₓ produits dans le moteur lors d'une combustion à rendement optimisé sont traités en sortie de moteur dans un catalyseur. Ce traitement requiert l'utilisation de l'agent de réduction à un niveau de concentration précis et dans une qualité extrême. La solution est ainsi précisément dosée et injectée dans le flux de gaz d'échappement où elle est hydrolysée avant de convertir l'oxyde d'azote (NOₓ) en azote (N₂) et en eau (H₂O).

Pour ce faire, il est nécessaire d'équiper les véhicules d'un réservoir contenant une solution d'additif (urée généralement), ainsi que d'un dispositif (ou injecteur) pour doser et injecter la quantité d'additif désirée dans la ligne d'échappement. Généralement, un dispositif d'alimentation est utilisé pour véhiculer l'additif du réservoir vers l'injecteur, via un canal d'injection (ou ligne d'injection).

Généralement, le dispositif d'alimentation comprend une pompe rotative entrainée par un moteur.

En vue de faciliter le fonctionnement, le redémarrage du système en cas de gel et d'éviter l'éclatement des tuyaux souvent flexibles qui véhiculent l'additif (urée généralement), il est avantageux de purger les canalisations à la fin du fonctionnement du système. En particulier, il est avantageux de purger le canal d'injection.

Généralement, la purge de la ou des ligne(s) s'effectue par aspiration d'air et/ou des gaz d'échappement à travers l'injecteur à l'aide de la pompe rotative
qui à cet effet tourne dans un sens inverse au sens pour l'alimentation de l'injecteur.

Le document US 2010/175369 A1 décrit une pompe selon le préambule de la revendication 1.

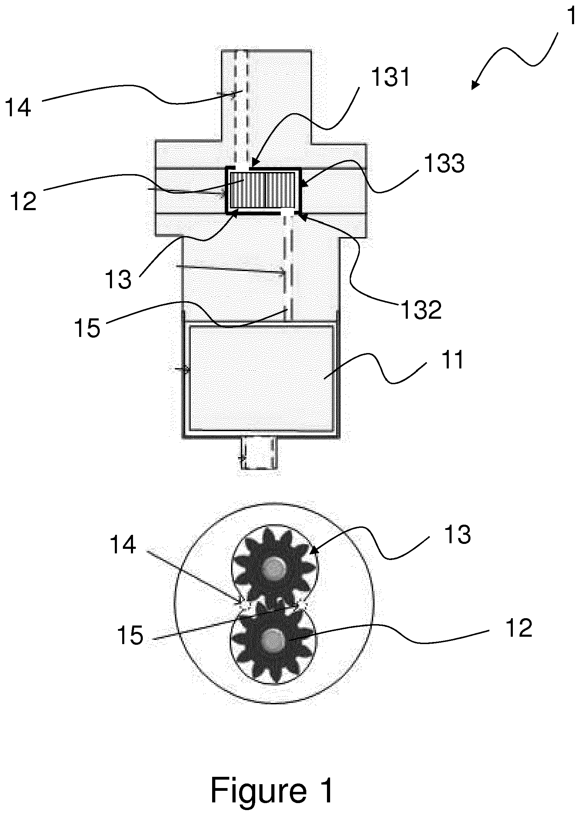

La figure 1 illustre schématiquement un exemple d'une pompe rotative connue pour un système SCR.

La pompe rotative 1 de la figure 1 est configurée pour tourner suivant un premier sens de rotation pour véhiculer de l'additif stocké dans un réservoir vers un injecteur via un canal d'injection, et suivant un deuxième sens de rotation (inverse au premier sens de rotation) pour purger le canal d'injection. La pompe rotative 1 comprend :
- un rotor 11 coopérant avec un stator (non représenté) ; et
- une chambre 13 dans laquelle est logé un système d'engrenages 12.

La chambre 13 est mise en communication fluidique avec le réservoir et le canal d'injection par l'intermédiaire respectivement d'un canal d'entrée 14 et d'un canal de sortie 15. Le canal d'entrée 14 est relié à la paroi supérieure 131 de la chambre et le canal de sortie 15 à la paroi inférieure 132 de la chambre. La paroi latérale 133 relie la paroi supérieure 131 et la paroi inférieure 132. Ainsi, la paroi supérieure 131 de la chambre comprend un premier orifice via lequel le canal d'entrée 14 peut communiquer avec l'intérieur de la chambre et la paroi inférieure 132 de la chambre comprend un deuxième orifice via lequel le canal de sortie 15 peut communiquer avec l'intérieur de la chambre.

Généralement, après que la purge a été effectuée, la chambre 13 est essentiellement remplie d'air. Dès lors, le prochain démarrage du système peut s'avérer difficile et long. Ainsi, pour faciliter ce démarrage il est généralement proposé d'ouvrir l'injecteur en début de démarrage. Or, ceci complique la stratégie de pilotage de l'injecteur. Par ailleurs, une quantité d'aditif non contrôlée peut être injectée dans la ligne d'échappement alors que celle-ci n'a pas encore atteint une température suffisante pour assurer la réaction chimique souhaitée.

La présente invention vise à résoudre ces problèmes.

Dès lors, la présente invention concerne une pompe destinée à pomper un additif dans un système SCR pour véhicule, la pompe étant configurée pour tourner suivant un premier sens de rotation pour véhiculer de l'additif stocké dans un réservoir vers un injecteur via un canal d'injection, la pompe comprenant une chambre dans laquelle est logé un système d'engrenage avec de faibles jeux mécaniques entre les engrenages et la chambre afin de limiter au maximum les fuites interne de la pompe et la perte d'efficacité. La chambre comprend une paroi supérieure, une paroi de fond et une paroi latérale reliant la paroi supérieure et la paroi de fond, la chambre étant mise en communication fluidique avec le réservoir et le canal d'injection par l'intermédiaire respectivement d'un canal d'entrée et d'un canal de sortie. La pompe est telle que le canal d'entrée et le canal de sortie sont agencés de sorte que, après une purge du canal d'injection, la chambre recueille et retient de l'additif. Le canal de sortie est relié à la paroi supérieure de la chambre ou à la paroi latérale de la chambre et à une distance non nulle de la paroi de fond.

Ainsi, il est proposé d'arranger (i.e. relier) le canal de sortie sur la paroi supérieure ou latérale de la chambre à une distance prédéterminée et non nulle de la paroi de fond, de manière à utiliser la chambre du système d'engrenage comme un piège à additif. En d'autres termes, le canal de sortie est arrangé de sorte que la chambre retient un volume prédéterminé d'additif après une purge.

Plus précisément, la chambre selon l'invention est configurée pour recueillir et retenir de l'additif après une purge du canal d'injection (c'est-à-dire à l'arrêt du système). En effet, le fait de relier le canal de sortie à la paroi supérieure ou latérale de la chambre à une distance non nulle de la paroi de fond permet d'éviter que les résidus d'additif ne soient totalement drainés hors de la chambre par gravité. En d'autres termes, la chambre de l'invention comprend une paroi de fond dépourvue d'ouverture via laquelle les résidus d'additif peuvent sortir de la chambre par gravité.

Ainsi, l'additif retenu permet d'améliorer l'étanchéité radiale et axiale entre la chambre et les pièces rotatives contenues dans la chambre. Ceci étant dû au fait que la viscosité de l'additif retenu est plus élevée que celle de l'air.

La présente invention s'applique notamment à une pompe du type pompe à engrenage, pompe à palette ou pompe gerotor. Par exemple, la pompe gerotor comprend un système d'engrenage interne logé dans une chambre. Par exemple, la pompe à engrenage comprend un système d'engrenage externe logé dans une chambre.

Avantageusement, la chambre est configurée pour recueillir et stocker des résidus d'additif provenant du canal d'entrée. Généralement après une purge, le canal d'entrée contient des résidus d'additif (c'est-à-dire des gouttelettes d'additif). Ces résidus retombent généralement dans la chambre du système d'engrenage sous l'effet de la gravité et ils sont ensuite évacués de la chambre via le canal de sortie par gravité. L'invention propose donc une approche opposée selon laquelle on retient ces résidus d'additif dans la chambre. Pour ce faire, le canal d'entrée et le canal de sortie sont agencés par rapport à la chambre de telle sorte qu'il n'existe pas de chemin par lequel les résidus d'additif peuvent être totalement drainés hors de la chambre par gravité. Ainsi, lorsque la pompe est à l'arrêt après une purge, la chambre peut stocker de l'additif.

La chambre selon l'invention peut être partiellement remplie d'additif.

Préférentielle, la chambre selon l'invention est entièrement remplie d'additif. De cette façon, le système d'engrenage peut être totalement immergé dans de l'additif. En d'autres termes, avant le prochain démarrage du système, le système d'engrenage se trouve noyé dans de l'additif. Une telle configuration a l'avantage d'assurer un redémarrage aisé du système, de faciliter l'aspiration (le pompage) de l'additif du réservoir et de maintenir l'injecteur fermé en début de démarrage.

Selon un mode de réalisation particulièrement avantageux, le canal de sortie comprend une section en forme de siphon reliée à la paroi supérieure ou latérale de la chambre.

Selon un mode de réalisation particulier, le canal d'entrée comprend une section en forme de siphon reliée à la paroi supérieure ou latérale de la chambre.

Avantageusement, la pompe est configurée pour tourner suivant un deuxième sens de rotation pour purger le canal d'injection.

Dans un mode de réalisation avantageux, le canal d'entrée comprend un volume tampon configuré pour retenir de l'additif pendant la purge du canal d'injection. Ainsi, ce volume tampon constitue une réserve d'additif qui est destinée à remplir la chambre du système d'engrenage en fin de purge (c'est-à-dire à l'arrêt de la pompe). De cette façon, on s'assure que la chambre est toujours au moins partiellement remplie d'additif avant le prochain démarrage du système. Avantageusement, le volume tampon est dimensionné de sorte que, pendant la purge, il accumule une quantité d'additif suffisante pour remplir entièrement la chambre.

De préférence, le système d'engrenage comprend au moins deux engrenages (roues dentées) qui permettent, par rotation, de pomper de l'additif du réservoir vers le canal d'injection et d'aspirer de l'additif dans le canal d'injection vers le réservoir Les engrenages d'une telle pompe sont de préférence à base de polymère et plus particulièrement, d'un polymère chargé de fibres tel que du PEEK chargé de fibres de carbone.

La présente invention concerne également un réservoir pour système SCR comprenant une pompe à additif telle que décrite ci-dessus.

L'additif dont il est question dans le cadre de l'invention est de préférence un agent réducteur susceptible de réduire les NOx présents dans les gaz d'échappement des moteurs à combustion interne. Il s'agit avantageusement d'ammoniac utilisé directement (ce qui présente les inconvénients de sécurité et de corrosion associés) ou généré in situ, dans les gaz d'échappement au départ d'un précurseur tel que l'urée (ce qui permet d'éviter les inconvénients précités). L'invention donne de bons résultats avec l'urée et en particulier, avec les solutions aqueuses d'urée. Les solutions eutectiques (comprenant 32.5% en poids d'urée) conviennent bien.

La présente invention peut être appliquée à tout moteur à combustion interne susceptible de générer des NOx dans ses gaz d'échappement.

Le système selon l'invention comprend au moins un réservoir destiné au stockage de l'additif et au moins un canal (ou ligne) d'injection destiné à amener l'additif vers un tuyau d'échappement du moteur. Ce canal est muni en son extrémité, d'un injecteur permettant l'injection de l'additif dans les gaz d'échappement.

Le système selon l'invention comprend également une pompe pour amener l'additif du réservoir à additif vers l'injecteur. Cette pompe peut être située dans le réservoir à additif (avec comme avantage de constituer avec lui, un module compact et intégré) ou, compte tenu de l'environnement corrosif, être situé en dehors du réservoir à additif. Ses matériaux constitutifs seront de préférence choisis parmi les métaux résistant à la corrosion (certains grades d'acier inoxydable et de polymères notamment).

Le plus souvent, le système selon l'invention comprend un calculateur relié à l'injecteur et permettant d'injecter dans les gaz d'échappement, la quantité d'additif requise (notamment en fonction des paramètres suivants : taux d'émission et de conversion des NOx; température et pression; vitesse et charge du moteur...).

D'autres caractéristiques et avantages de l'invention apparaîtront à la lecture de la description suivante, donnée à titre d'exemple indicatif et non limitatif, et des dessins annexés, dans lesquels :
- la figure 1, commentée précédemment, illustre schématiquement une pompe à additif connue de l'état de la technique ;
- la figure 2 illustre schématiquement une pompe à additif selon un premier mode de réalisation particulier de l'invention ;
- la figure 3 illustre schématiquement une pompe à additif selon un deuxième mode de réalisation particulier de l'invention ; et
- la figure 4 illustre schématiquement une pompe à additif selon un troisième mode de réalisation particulier de l'invention.

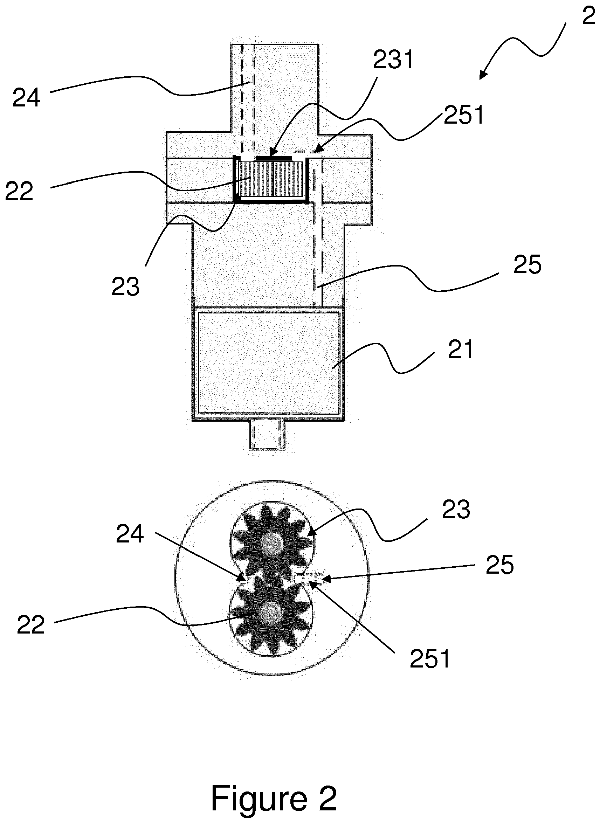

On décrit maintenant en relation avec la figure 2 un premier mode de réalisation d'une pompe à additif selon l'invention.

La pompe 2 est configurée pour tourner suivant un premier sens de rotation pour véhiculer de l'additif stocké dans un réservoir vers un injecteur via un canal d'injection, et suivant un deuxième sens de rotation (inverse au premier sens de rotation) pour purger le canal d'injection. La pompe 2 comprend :
- un rotor 21 coopérant avec un stator (non représenté) ; et
- une chambre 23 dans laquelle est logé un système d'engrenages 22.

La chambre 23 est mise en communication fluidique avec le réservoir et le canal d'injection par l'intermédiaire respectivement d'un canal d'entrée 24 et d'un canal de sortie 25.

Dans ce premier mode de réalisation particulier, le canal d'entrée 24 et le canal de sortie 25 sont reliés à (montés sur) la paroi supérieure 231 de la chambre. Ainsi, la paroi supérieure 231 de la chambre comprend un premier orifice via lequel le canal d'entrée 24 peut communiquer avec l'intérieur de la chambre et un deuxième orifice via lequel le canal de sortie 25 peut communiquer avec l'intérieur de la chambre. La paroi de fond de la chambre ne comprend aucun orifice. Ainsi, l'additif ne peut entrer dans et sortir de la chambre que par les premier et deuxième orifices.

Le canal de sortie 25 comprend une section 251 en forme de siphon. Une telle architecture permet, après que la purge a été effectuée (i.e. pompe à l'arrêt), de piéger dans la chambre 23 les résidus d'additif tombant par gravité du canal d'entrée 24. En effet, la position du canal de sortie 25 est telle qu'elle ne permet pas aux résidus d'additif de s'échapper totalement par gravité de la chambre. Ces résidus d'additif seront évacués de la chambre par le système d'engrenage 22 au prochain démarrage du système (i.e. pompe en fonctionnement).

On note que dans des conditions de gel, l'additif stocké dans la chambre 23 peut geler. Avant de remettre en marche la pompe (et donc de faire tourner le système d'engrenage), il est avantageux de liquéfier (i.e. dégeler) l'additif stocké dans la chambre 23. Ceci peut se faire, par exemple, au moyen d'un dispositif de chauffage placé dans le réservoir. Par ailleurs, on peut élégamment appliquer une stratégie de préchauffage de la pompe en pilotant, par exemple, les bobines de la pompe pour s'en servir comme éléments de chauffe.

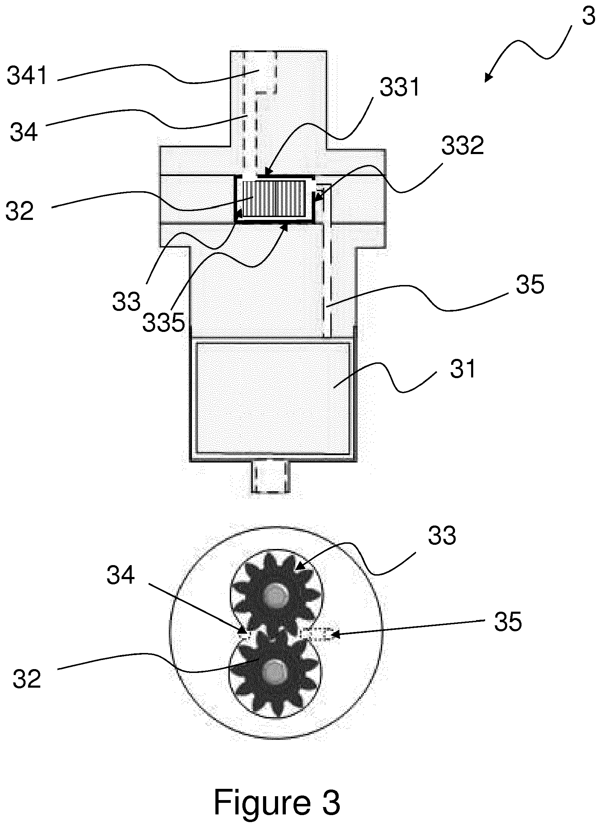

On décrit maintenant en relation avec la figure 3 un deuxième mode de réalisation d'une pompe à additif selon l'invention.

La pompe 3 comprend :
- un rotor 31 coopérant avec un stator (non représenté) ; et
- une chambre 33 dans laquelle est logé un système d'engrenages 32.

La chambre 33 est mise en communication fluidique avec le réservoir et le canal d'injection par l'intermédiaire respectivement d'un canal d'entrée 34 et d'un canal de sortie 35.

Dans ce deuxième mode de réalisation particulier, le canal d'entrée 34 est relié à (monté sur) la paroi supérieure 331 de la chambre. Le canal d'entrée 34 comprend un volume tampon 341 configuré pour retenir de l'additif pendant la purge du canal d'injection. Avantageusement, le volume tampon 341 agit comme une sorte de séparateur liquide-vapeur. Plus précisément, la section hydraulique du volume tampon est suffisamment large pour que le passage de l'air (aspiré par l'injecteur) dans ce volume soit un écoulement par bulles d'air, contrairement à un écoulement par bouchons qui se produit dans un volume de section hydraulique inférieure ou égale à la section des bulles d'air.

Le canal de sortie 35 est relié à (monté sur) la paroi latérale 332 de la chambre dans une zone proche (c'est-à-dire à quelques millimètres) de la paroi supérieure 331 de la chambre.

Ainsi, dans ce deuxième mode de réalisation particulier la paroi supérieure 331 de la chambre comprend un premier orifice via lequel le canal d'entrée 34 peut communiquer avec l'intérieur de la chambre et la paroi latérale 332 de la chambre comprend un deuxième orifice via lequel le canal de sortie 35 peut communiquer avec l'intérieur de la chambre. La paroi de fond 335 de la chambre ne comprend aucun orifice. Ainsi, l'additif ne peut entrer dans et sortir de la chambre que par les premier et deuxième orifices.

La paroi latérale 332 relie la paroi supérieure 331 et la paroi de fond 335. Comme illustré dans cet exemple de réalisation, le canal de sortie 35 est arrangé sur la paroi latérale 332 de la chambre à une distance prédéterminée et non nulle de la paroi de fond 335.

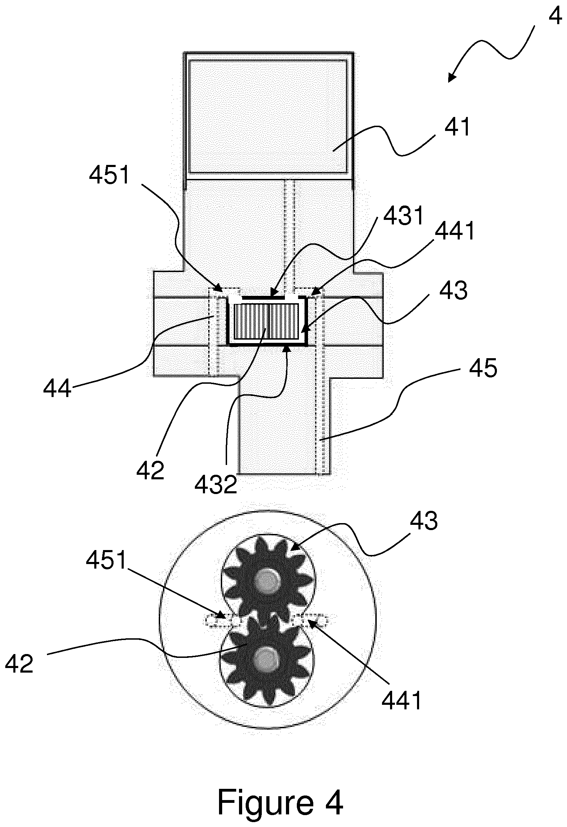

On décrit maintenant en relation avec la figure 4 un troisième mode de réalisation d'une pompe à additif selon l'invention.

La pompe 4 comprend :
- un rotor 41 coopérant avec un stator (non représenté) ; et
- une chambre 43 dans laquelle est logé un système d'engrenages 42.

La chambre 43 est mise en communication fluidique avec le réservoir et le canal d'injection par l'intermédiaire respectivement d'un canal d'entrée 44 et d'un canal de sortie 45.

Dans ce troisième mode de réalisation particulier, le canal d'entrée 44 et le canal de sortie 45 sont reliés à (montés sur) la paroi supérieure 431 de la chambre. Ainsi, la paroi supérieure 431 de la chambre comprend un premier orifice via lequel le canal d'entrée 44 peut communiquer avec l'intérieur de la chambre et un deuxième orifice via lequel le canal de sortie 45 peut communiquer avec l'intérieur de la chambre. La paroi de fond 432 de la chambre ne comprend aucun orifice. Ainsi, l'additif ne peut entrer dans et sortir de la chambre que par les premier et deuxième orifices.

Le canal d'entrée 44 comprend une section 441 en forme de siphon. Le canal de sortie 45 comprend une section 451 en forme de siphon.

## Revendications

1. Pompe (2 : 3 ; 4) destinée à pomper un additif dans un système SCR pour véhicule, la pompe (2 ; 3 ; 4) étant configurée pour tourner suivant un premier sens de rotation pour véhiculer de l'additif stocké dans un réservoir vers un injecteur via un canal d'injection, la pompe comprenant une chambre (23 ; 33 ; 43) dans laquelle est logé un système d'engrenages (22 ; 32 ; 42), la chambre (23 ; 33 ; 43) comprenant une paroi supérieure (231 ; 331 ; 431), une paroi de fond (335 ; 432) et une paroi latérale (332) reliant la paroi supérieure (231 ; 331 ; 431) et la paroi de fond (335 ; 432), la chambre (23 ; 33 ; 43) étant mise en communication fluidique avec le réservoir et le canal d'injection par l'intermédiaire respectivement d'un canal d'entrée (24 ; 34 ; 44) et d'un canal de sortie (25 ; 35 ; 45),
le canal d'entrée (24 ; 34 ; 44) et le canal de sortie (25 ; 35 ; 45) étant agencés de sorte que, après une purge du canal d'injection, la chambre recueille et retient de l'additif, **caractérisée en ce que** le canal de sortie (25 ; 35 ; 45) est relié :
- à la paroi supérieure (231 ; 431) de la chambre ; ou
- à la paroi latérale (332) de la chambre et à une distance non nulle de la paroi de fond (335 ; 432).

2. Pompe (2 ; 3 ; 4) selon la revendication 1, **caractérisée en ce que** le canal de sortie (25 ; 35 ; 45) comprend une section (251 ; 451) en forme de siphon reliée à la paroi supérieure (231 ; 431) ou latérale (332) de la chambre et à une distance non nulle de la paroi de fond (335 ; 432).

3. Pompe (2 ; 3 ; 4) selon la revendication 1 ou 2, **caractérisée en ce que** le canal d'entrée (24 ; 34 ; 44) comprend une section (441) en forme de siphon reliée à la paroi supérieure (231 ; 431) ou latérale (332) de la chambre et à une distance non nulle de la paroi de fond (335 ; 432).

4. Pompe (2 ; 3 ; 4) selon l'une quelconque des revendications 1 à 3, **caractérisée en ce que** la pompe (2 ; 3 ; 4) est configurée pour tourner suivant un deuxième sens de rotation pour purger le canal d'injection.

5. Pompe (3) selon l'une quelconque des revendications 1 à 4, **caractérisée en ce que** le canal d'entrée (34) comprend un volume tampon (341) configuré pour retenir de l'additif pendant la purge du canal d'injection.

6. Pompe (2 ; 3 ; 4) selon l'une quelconque des revendications 1 à 5, **caractérisée en ce que** le système d'engrenages (22 ; 32 ; 42) comprend au moins deux engrenages à base de polymère.

7. Pompe (2 ; 3 ; 4) selon l'une quelconque des revendications 1 à 6, **caractérisée en ce que** l'additif est une solution aqueuse d'urée.

8. Réservoir pour système SCR comprenant une pompe (2 ; 3 ; 4) selon l'une quelconque des revendications 1 à 7.

## Patentansprüche

1. Pumpe (2; 3; 4) zum Pumpen eines Zusatzmittels in ein SCR-System für Fahrzeug, wobei die Pumpe (2; 3; 4) ausgestaltet ist, um sich in einer ersten Drehrichtung zu drehen, um das in einem Tank bevorratete Zusatzmittel über einen Einspritzkanal zu einem Einspritzelement hin zu transportieren, wobei die Pumpe eine Kammer (23; 33; 43) umfasst, in der ein Getriebesystem (22; 32; 42) aufgenommen ist, wobei die Kammer (23; 33; 43) eine obere Wand (231; 331; 431), eine Bodenwand (335; 432) und eine Seitenwand (332), welche die obere Wand (231; 331; 431) und die Bodenwand (335; 432) verbindet, umfasst, wobei die Kammer (23; 33; 43) mittels eines Einlasskanals (24; 34; 44) bzw. eines Auslasskanals (25; 35; 45) mit dem Tank und dem Einspritzkanal in Strömungsverbindung gebracht ist,
wobei der Einlasskanal (24; 34; 44) und der Auslasskanal (25; 35; 45) so vorgesehen sind, dass, nach einem Spülen des Einspritzkanals, die Kammer das Zusatzmittel auffängt und zurückhält, **dadurch gekennzeichnet, dass** der Auslasskanal (25; 35; 45) verbunden ist
a. mit der oberen Wand (231; 431) der Kammer; oder
b. mit der Seitenwand (332) der Kammer und in einem Abstand ungleich null zu der Bodenwand (335; 432).

2. Pumpe (2; 3; 4) nach Anspruch 1, **dadurch gekennzeichnet, dass** der Auslasskanal (25; 35; 45) einen siphonförmigen Abschnitt (251; 451) umfasst, der mit der der oberen Wand (231; 431) oder der Seitenwand (332) der Kammer und in einem Abstand ungleich null zu der Bodenwand (335; 432) verbunden ist.

3. Pumpe (2; 3; 4) nach Anspruch 1 oder 2, **dadurch gekennzeichnet, dass** der Einlasskanal (24; 34; 44) einen siphonförmigen Abschnitt (441) umfasst, der mit der oberen Wand (231; 431) oder der Seitenwand (332) der Kammer und in einem Abstand ungleich null zu der Bodenwand (335; 432) verbunden ist.

4. Pumpe (2; 3; 4) nach einem der Ansprüche 1 bis 3, **dadurch gekennzeichnet, dass** die Pumpe (2; 3; 4) ausgestaltet ist, um sich in einer zweiten Drehrichtung zu drehen, um den Einspritzkanal zu spülen.

5. Pumpe (3) nach einem der Ansprüche 1 bis 4, **dadurch gekennzeichnet, dass** der Einlasskanal (24; 34; 44) ein Puffervolumen (341) umfasst, das ausgestaltet ist, um das Zusatzmittel während des Spülens des Einspritzkanals zurückzuhalten.

6. Pumpe (2; 3; 4) nach einem der Ansprüche 1 bis 5, **dadurch gekennzeichnet, dass** das Getriebesystem (22; 32; 42) mindestens zwei Getriebe auf Polymerbasis umfasst.

7. Pumpe (2; 3; 4) nach einem der Ansprüche 1 bis 6, **dadurch gekennzeichnet, dass** das Zusatzmittel eine wässrige Harnstoff-Lösung ist.

8. Tank für SCR-System umfassend eine Pumpe (2; 3; 4) nach einem der Ansprüche 1 bis 7.

## Claims

1. A pump (2;3;4) intended to pump an additive in a vehicle SCR system, the pump (2;3;4) being configured to rotate in a first direction of rotation to convey additive stored in a tank to an injector via an injection duct, the pump comprising a chamber (23;33;43) in which is housed a system of gears (22;32;42), the chamber (23;33;43) comprising an upper wall (231;331;431), a bottom wall (335;432) and a side wall (332) connecting the upper wall (231;331;431) and the bottom wall (335;432), the chamber (23;33;43) being placed in fluidic communication with the tank and the injection duct via, respectively, an inlet duct (24;34;44) and an outlet duct (25;34;44),
the inlet duct (24;34;44) and the outlet duct (25;35;45) being arranged in such a way that, after the injection duct has been purged, the chamber collects and holds some additive, **characterized in that** the outlet duct (25;35;45) is connected:
- to the upper wall (231;431) of the chamber; or
- to the side wall (332) of the chamber and at a non-zero distance away from the bottom wall (335;432).

2. Pump (2;3;4) according to Claim 1, **characterized in that** the outlet duct (25;35;45) comprises a siphon-form section (251;451) connected to the upper wall (231;431) or side wall (332) of the chamber and at a non-zero distance away from the bottom wall (335;432).

3. Pump (2;3;4) according to Claim 1 or 2, **characterized in that** the inlet duct (24;34;44) comprises a siphon-form section (441) connected to the upper wall (231;431) or side wall (332) of the chamber and at a non-zero distance away from the bottom wall (335;432).

4. Pump (2;3;4) according to any one of Claims 1 to 3, **characterized in that** the pump (2;3;4) is configured to rotate in a second direction of rotation in order to purge the injection duct.

5. Pump (3) according to any one of Claims 1 to 4, **characterized in that** the inlet duct (34) comprises a buffer volume (341) configured to hold some additive while the injection duct is being purged.

6. Pump (2;3;4) according to any one of Claims 1 to 5, **characterized in that** the system of gears (22;32;42) comprises at least two polymer-based gears.

7. Pump (2;3;4) according to any one of Claims 1 to 6, **characterized in that** the additive is an aqueous solution of urea.

8. Tank for an SCR system comprising a pump (2;3;4) according to any one of Claims 1 to 7.
